# EUROPÄISCHE PATENTANMELDUNG

(11) **EP 4 751 992 A1**
(43) Veröffentlichungstag der Anmeldung: **03.06.2026**
(21) Anmeldenummer: 25219750.4
(22) Anmeldetag: 01.12.2025
(51) Int. Cl.: B60N 2/06, B29C 65/48, B60N 2/16, B60N 2/18, B60N 2/23, D07B 1/14, D07B 7/14, F16C 1/02

(54) **VORRICHTUNG UND VERFAHREN ZUM HERSTELLEN EINER FLEXIBLEN WELLE**

(30) Priorität: 02.12.2024 CN 202411753049
(71) Anmelder: GEMO Jiaxing Machinery Manufacturing Co., Ltd., 314009 Zhejiang (CN)
(72) Erfinder: RUDOLFI, Karl, 47809 Krefeld (DE)
(74) Vertreter: Eisenführ Speiser

(57) **Zusammenfassung**

Die Erfindung betrifft eine Vorrichtung 100 zum Herstellen einer flexiblen Welle 500, insbesondere einer flexiblen Sitzverstellwelle für ein Fahrzeug, wobei die flexible Welle 500 eine Grundwelle 510 und einen Flockfaden 520 umfasst, wobei die Grundwelle 510 bevorzugt eine spiralförmig beflockte Grundwelle ist, wobei die Vorrichtung 100 aufweist: eine Grundwellenvorspannungseinheit 110, die ausgestaltet ist, die Grundwelle vorzuspannen und eine Flockfadenbereitstellungseinheit 120, die ausgestaltet ist, den Flockfaden bereitzustellen, wobei die Grundwellenvorspannungseinheit ausgestaltet ist, die Grundwelle um eine Längsachse der Grundwelle zu drehen, wobei die Flockfadenbereitstellungseinheit ausgestaltet ist, den Flockfaden an der Grundwelle zu positionieren und wobei die Vorrichtung ausgestaltet ist, den Flockfaden entlang der gespannten Grundwelle zu bewegen, während die Grundwelle gedreht wird, um den Flockfaden spiralförmig um die Grundwelle zu wickeln. Die Vorrichtung ermöglicht eine einfache Herstellung einer qualitativ hochwertigen Welle.

## Beschreibung

Die vorliegende Erfindung betrifft das Gebiet von Herstellungsmaschinen und insbesondere eine Vorrichtung und ein Verfahren zum Herstellen einer flexiblen Welle, die eine flexible Sitzverstellwelle für ein Fahrzeug sein kann.

Eine flexible Welle, insbesondere eine flexible Sitzverstellwelle, wird normalerweise in Fahrzeugen zur Verstellung des Sitzes verwendet. Dabei dient die Sitzverstellwelle als Verbindungselement zwischen einem Motor und einem Getriebe der Sitzverstellung.

Es gibt verschiedene Arten von Grundwellen für die Sitzverstellwellen, je nach System müssen die Wellen sehr flexibel oder aber steif sein. Durch unterschiedliche Herstellungsverfahren und Beflockungsarten können verschiedene flexible Wellen hergestellt werden, die den verschiedenen Anforderungen entsprechen.

Eine der hochwertigsten flexiblen Wellen ist eine Welle, die einem sogenannten Spiralbeflockungsverfahren und einem sogenannten Overflockverfahren unterzogen wird. In beiden Fällen umfasst die Welle eine Grundwelle, die acht Drähte umfasst kann, um die ein Flockgarn spiralförmig gewickelt sein kann. Durch die Spiralbeflockung kann ein Flockgarn zwischen den Windungen einer äußersten Drahtlage positioniert, beispielsweise verklebt, werden. Alternativ können auch zwei Flockgarne in der äußersten Drahtlage positioniert werden. Das Overflockverfahren führt dann dazu, dass um die Grundwelle, d.h. ggf. über der Spiralbeflockung, eine zusätzliche Beflockungsschicht entsteht.

Am effektivsten bei flexiblen Wellen ist im Allgemeinen zwar ein Endlosverfahren, durch das die Welle als Endlosware gefertigt wird, dies gestaltet sich jedoch bei flexiblen Wellen, die zum Beispiel besondere Enden haben sollen, zum Beispiel Vierkantenden, als schwierig. Die Enden der flexiblen Wellen sollen dabei frei von einer (zusätzlichen) Beflockungsschicht sein, wobei eine Spiralbeflockung zwischen den Windungen vorgesehen sein kann. Dies kann sich aber abhängig vom Beflockungsverfahren, welches bei hochwertigeren Wellen, komplexer ist, als schwierig herausstellen, denn die Beflockung nachträglich von den Enden zu entfernen, kann den Spiralflock in der Grundwelle beschädigen oder sogar entfernen.

Es ist daher gewünscht, eine Lösung vorzustellen, die eine einfache Herstellung von hochwertigen Wellen ermöglicht und die vorherigen Probleme adressiert.

Erfindungsgemäß wird nach einem ersten Aspekt eine Vorrichtung zum Herstellen einer flexiblen Welle vorgeschlagen, nämlich eine Vorrichtung zum Herstellen einer flexiblen Welle, insbesondere einer flexiblen Sitzverstellwelle für ein Fahrzeug, wobei die flexible Welle eine Grundwelle und einen Flockfaden umfasst, wobei die Grundwelle bevorzugt eine spiralförmig beflockte Grundwelle ist, wobei die Vorrichtung aufweist: eine Grundwellenvorspannungseinheit, die ausgestaltet ist, die Grundwelle vorzuspannen, und eine Flockfadenbereitstellungseinheit, die ausgestaltet ist, den Flockfaden bereitzustellen, wobei die Grundwellenvorspannungseinheit ausgestaltet ist, die Grundwelle um eine Längsachse der Grundwelle zu drehen, wobei die Flockfadenbereitstellungseinheit ausgestaltet ist, den Flockfaden an der Grundwelle zu positionieren und wobei die Vorrichtung ausgestaltet ist, den Flockfaden entlang der gespannten Grundwelle zu bewegen, während die Grundwelle gedreht wird, um den Flockfaden spiralförmig um die Grundwelle zu wickeln.

Erfindungsgemäß wird nach einem zweiten Aspekt ein Verfahren zum Herstellen einer flexiblen Welle vorgeschlagen, nämlich ein Verfahren zum Herstellen einer flexiblen Welle, insbesondere einer flexiblen Sitzverstellwelle für ein Fahrzeug, wobei die flexible Welle eine Grundwelle und einen Flockfaden umfasst, wobei die Grundwelle bevorzugt eine spiralförmig beflockte Grundwelle ist, wobei das Verfahren die Schritte umfasst: (i) Vorspannen der Grundwelle, bevorzugt mit einer Grundwellenvorspannungseinheit, besonders bevorzugt mit einem Motor und einer Bremseinheit, (ii) Bereitstellen des Flockfadens und Positionieren des Flockfadens an der Grundwelle, bevorzugt mit einer Flockfadenbereitstellungseinheit, (iii) Drehen der Grundwelle um eine Längsachse der Grundwelle, bevorzugt mit der Grundwellenvorspannungseinheit, und (iv) Bewegen des Flockfadens entlang der gespannten Grundwelle, während die Grundwelle gedreht wird, bevorzugt mit der Flockfadenbereitstellungseinheit, um den Flockfaden spiralförmig um die Grundwelle zu wickeln. Bevorzugt wird das Verfahren durch eine Ausführungsform der erfindungsgemäßen Vorrichtung durchgeführt. Weiter bevorzugt umfasst das Verfahren den weiteren Schritt: (v) Aufheizen des Flockfadens nach Wickeln des Flockfadens um die Grundwelle, so dass der Flockfaden aufgetrennt und/oder verschmolzen wird und/oder (vi) Schneiden des Flockfadens.

Die erfindungsgemäße Vorrichtung ist zum Herstellen einer flexiblen Welle vorgesehen und eingerichtet. Insbesondere ist die erfindungsgemäße Vorrichtung zum Herstellen einer flexiblen Sitzverstellwelle für ein Fahrzeug vorgesehen und eingerichtet. Die flexible Welle umfasst eine Grundwelle, wobei durch Spiralbeflockung ein Flockgarn zwischen den Windungen der äußersten Drahtlage der Grundwelle positioniert sein kann. Das heißt es ist bevorzugt, dass die Grundwelle einen Flockfaden umfasst, der spiralförmig mit Drähten in der letzten Lage der Grundwelle angeordnet ist. Die erfindungsgemäße Vorrichtung (bzw. das erfindungsgemäße Verfahren) kann als Vorrichtung (Verfahren) zur Herstellung einer Beflockungsschicht verstanden werden.

Die Vorrichtung weist eine Grundwellenvorspannungseinheit auf. Die Grundwellenvorspannungseinheit ist ausgestaltet, die Grundwelle vorzuspannen. In diesem Fall bedeutet "vorspannen", dass auf die Grundwelle entlang einer Achse der Grundwelle eine Zugkraft auf die Grundwelle in zwei entgegengesetzte Richtungen wirkt. Anders ausgedrückt ist die Grundwellenvorspannungseinheit ausgestaltet, eine Kraft zu wirken, die die Grundwelle spannt, so dass die Grundwelle entsprechend dieser Kraft vorgespannt ist.

Bevorzugt ist die Grundwellenvorspannungseinheit derart ausgestaltet, dass die Grundwelle in die Grundwellenvorspannungseinheit einspannbar und durch die Grundwellenvorspannungseinheit vorspannbar ist. Beispielsweise umfasst die Grundwellenvorspannungseinheit eine Halterung für die Grundwelle, in der die Grundwelle einspannbar ist und durch die Grundwellenvorspannungseinheit vorspannbar ist. Das Einspannen/Vorspannen kann dabei händisch oder automatisiert erfolgen.

Weiter ist die Grundwellenvorspannungseinheit vorzugsweise ausgestaltet, eine veränderbare Kraft zu wirken, die die Grundwelle spannt, so dass die Grundwelle entsprechend dieser Kraft vorgespannt ist.

Die Grundwellenvorspannungseinheit ist außerdem ausgestaltet, die Grundwelle um eine Längsachse der Grundwelle zu drehen. Das heißt, dass die Grundwellenvorspannungseinheit ausgestaltet ist, die Grundwelle vorzuspannen und die vorgespannte Grundwelle um die Längsachse der Grundwelle zu drehen.

Die Vorrichtung weist zudem eine Flockfadenbereitstellungseinheit auf, die ausgestaltet ist, den Flockfaden bereit zu stellen.

Die Flockfadenbereitstellungseinheit ist zudem ausgestaltet, den Flockfaden an der Grundwelle zu positionieren. Das heißt, dass die Flockfadenbereitstellungseinheit ausgestaltet ist, den Flockfaden bereitzustellen und den Flockfaden an der Grundwelle zu positionieren. Insbesondere ist die Flockfadenbereitstellungseinheit ausgestaltet, den Flockfaden an der Grundwelle zu halten, bevorzugt an einer definierten Position der Grundwelle. In einem Fall, in dem die Grundwelle Enden mit im Wesentlichen viereckigen Querschnitt und einen mittleren Bereich mit im Wesentlichen kreisförmigen Querschnitt aufweist, können die definierten Positionen jeweilige Positionen am Übergang vom im Wesentlichen viereckigen zum kreisförmigen Querschnitt sein.

Bevorzugt umfasst die Flockfadenbereitstellungseinheit eine zylinderförmige Spindel, auf die der Flockfaden aufwickelbar ist.

Die Vorrichtung ist ausgestaltet, den Flockfaden entlang der gespannten Grundwelle zu bewegen, während die Grundwelle gedreht wird, um den Flockfaden spiralförmig um die Grundwelle zu wickeln. Insbesondere ist die Flockfadenbereitstellungseinheit ausgestaltet, den Flockfaden entlang der gespannten Grundwelle zu bewegen, während die Grundwelle durch die Grundwellenvorspannungseinheit vorgespannt und gedreht wird. Dadurch kann der Flockfaden spiralförmig um die Grundwelle gewickelt werden. Dabei stehen die Grundwellenvorspannungseinheit und die Flockfadenbereitstellungseinheit bevorzugt in einer örtlich festen Beziehung zueinander, wobei dann zumindest ein Teil der Flockfadenbereitstellungseinheit gegenüber der Grundwellenvorspannungseinheit beweglich ist.

Da die Grundwelle durch die Grundwellenvorspannungseinheit gespannt und gedreht wird und der Flockfaden durch die Flockfadenbereitstellungseinheit bereitgestellt und entlang der gespannten Grundwelle bewegt wird, kann ein einfaches Herstellungsverfahren für flexible Welle bereitgestellt werden, welches auch für hochwertige flexible Wellen anwendbar ist.

In einer vorteilhaften Ausgestaltung eines Aspekts der Erfindung weist die Grundwellenvorspannungseinheit einen Motor und eine Bremseinheit auf. Die Grundwellenvorspannungseinheit ist dann ausgestaltet, die Grundwelle zwischen dem Motor und der Bremseinheit vorzuspannen, wobei der Motor ausgestaltet ist, die Grundwelle um die Längsachse der Grundwelle gegen eine Bremskraft der Bremseinheit zu drehen. Bevorzugt weist ein Wert der Bremskraft einen Wert von 400 N bis 600 N auf, wobei es sich bei diesem Wert um einen Wert einer Bremskraft handelt, die auf die Bremse aufgebracht wird. Ein Wert der Bremskraft, die auf die Grundwelle wirkt, liegt bevorzugt bei 10 bis 100 N.

Die Vorrichtung ist weiter bevorzugt ausgestaltet, den Motor und die Bremseinheit zum Spannen der Grundwelle voneinander wegzubewegen.

Der Motor und die Bremseinheit können somit die Vorspannung der Grundwelle sowie die Drehung der Grundwelle bewirken, was zu einer einfachen Bauweise der Vorrichtung führt.

In einer bevorzugten Variante der obigen Ausgestaltung weist der Motor ein erstes Befestigungselement zum Befestigen eines ersten Endes der Grundwelle und die Bremseinheit ein zweites Befestigungselement zum Befestigen eines zweiten Endes der Grundwelle auf.

Das erste Befestigungselement ist bevorzugt ausgestaltet, das erste Ende der Grundwelle lösbar an dem Motor zu befestigen und das zweite Befestigungselement ist bevorzugt ausgestaltet, das zweite Ende der Grundwelle lösbar an der Bremseinheit zu befestigen. Beispielsweise sind das erste Ende der Grundwelle und das zweite Ende der Grundwelle identisch ausgestaltet. Dann ist besonders bevorzugt, dass das erste Befestigungselement und das zweite Befestigungselement identisch ausgestaltet sind. Dies ermöglicht eine weitere Vereinfachung des Einspannvorgangs.

Bevorzugt stehen sich der Motor und die Bremseinheit gegenüber, so dass die Grundwelle zwischen dem Motor und der Bremseinheit vorgespannt wird. Insbesondere kann eine Vorspannung dadurch erreicht werden, dass der Motor und die Bremseinheit voneinander wegbewegt werden. Dabei ist es besonders vorteilhaft, wenn der Motor und die Bremseinheit auf einer Schiene angeordnet sind, auf der sich der Motor und die Bremseinheit voneinander wegbewegen können. Dies ermöglicht ein einfaches Einspannen bzw. Vorspannen der Grundwelle in der Grundwellenvorspannungseinheit bzw. dem Motor und der Bremseinheit.

Die obige Variante kann ferner vorteilhafterweise so ausgeführt werden, dass das erste Befestigungselement und/oder das zweite Befestigungselement jeweils eine Öffnung zur Aufnahme eines jeweiligen Endes der Grundwelle und jeweils ein Fixiermittel zur lösbaren Fixierung des jeweiligen Endes der Grundwelle an dem Motor und der Bremseinheit aufweist. Bevorzugt sind eine Querschnittfläche der Öffnung und ein Querschnitt, d.h. eine Querschnittsfläche, des jeweiligen Endes identisch, besonders bevorzugt im Wesentlichen viereckig, beispielsweise rechteckig oder quadratisch. Eine Öffnung mit einem Fixiermittel hat den Vorteil, dass die Grundwelle in einfacher Weise in das Befestigungselement eingesteckt werden kann.

Das Fixiermittel kann insbesondere eine Schraube oder einen Stift umfassen, der/die auf das jeweilige Ende, das in der Öffnung steckt, wirkt. Zusätzlich oder alternativ ist auch ein dehnbares Material, wie Gummi, in der Öffnung denkbar, dass das jeweilige Ende in der Öffnung, zumindest gegen eine gewisse Herausziehkraft, fixiert. Auch andere Fixiermittel sind denkbar, so lange sie ein lösbares Fixieren des jeweiligen Endes der Grundwelle ermöglichen.

In einer anderen vorteilhaften Ausgestaltung eines Aspekts der Erfindung weist die Grundwellenvorspannungseinheit ein Fixierelement zur lösbaren Fixierung des Flockfadens an der Grundwellenvorspannungseinheit auf. Insbesondere ist das Fixierelement ausgestaltet, den Flockfaden an der Grundwelle zu positionieren und auch die Ausrichtung des Flockfadens zu definieren. D.h. das Fixierelement ist ausgestaltet, den Flockfaden an der Grundwelle auszurichten. Ein Fixierelement für den Flockfaden ermöglicht eine wiederholbare Ausrichtung/Positionierung des Flockfadens an der Grundwelle, bevor der Flockfaden um die Grundwelle gewickelt wird. Dabei wird der Flockfaden bevorzugt vor Bewegen des Flockfadens entlang der gespannten Grundwelle von dem Fixierelement gelöst.

In einer anderen vorteilhaften Ausgestaltung eines Aspekts der Erfindung weist die Flockfadenbereitstellungseinheit ein Flockfadenaufsetzelement auf, das ausgestaltet ist, den Flockfaden auf eine Oberfläche der Grundwelle, bevorzugt nahe eines Endes der Grundwelle, aufzusetzen. Das Flockfadenaufsetzelement kann auch als Flockfadenfinger verstanden werden. Der Flockfaden kann zum Beispiel durch das Flockfadenaufsetzelement gefädelt werden.

Beispielsweise kann der Flockfaden durch das Flockfadenaufsetzelement gefädelt werden und entlang dem Fixierelement und ggf. entlang dem ersten Befestigungselement verlaufen, um so ohne wiederholbare Ausrichtung/Positionierung zu ermöglichen.

In einer anderen vorteilhaften Ausgestaltung eines Aspekts der Erfindung ist die Vorrichtung ausgestaltet, den Flockfaden mit einer vordefinierten Fadenspannung entlang der gespannten Grundwelle zu bewegen, wobei bevorzugt der Flockfaden mit Hilfe einer Flockfadenbremse, die besonders bevorzugt zumindest ein Federelement und eine Umlenkrolle aufweist, auf einer vordefinierten Fadenspannung gehalten wird. Bevorzugt weist die Vorrichtung eine Steuerung auf, die ausgestaltet ist, den Flockfaden mit einer vordefinierten Fadenspannung entlang der gespannten Grundwelle zu bewegen.

In einer anderen vorteilhaften Ausgestaltung eines Aspekts der Erfindung weist die Flockfadenbereitstellungseinheit einen Flockfadenschlitten auf, der ausgestaltet ist, den Flockfaden mit einer vordefinierten Vorschubgeschwindigkeit entlang der gespannten Grundwelle über eine vordefinierte Wegstrecke zu bewegen. In einem Fall, in dem auch das Flockfadenaufsetzelement vorgesehen ist, ist das Flockfadenaufsetzelement bevorzugt an dem Flockfadenschlitten angeordnet.

In einer anderen vorteilhaften Ausgestaltung eines Aspekts der Erfindung weist die Vorrichtung weiter ein Heizelement auf, das ausgestaltet ist, nach Wickeln des Flockfadens um die Grundwelle zumindest den Flockfaden derart aufzuheizen, dass der Flockfaden aufgetrennt und/oder verschmolzen wird. Dabei ist die Vorrichtung bevorzugt ausgestaltet, das Heizelement von einer Seite, beispielsweise von unten, nach Wickeln des Flockfadens um die Grundwelle an die Grundwelle heranzufahren. Das Heizelement ist bevorzugt ausgestaltet, den Flockfaden an zwei Positionen der Grundwelle aufzuheizen, zum Beispiel an zwei definierten Positionen der Grundwelle. In einem Fall, in dem die Grundwelle Enden mit im Wesentlichen viereckigen Querschnitt und einen mittleren Bereich mit im Wesentlichen kreisförmigen Querschnitt aufweist, können die definierten Positionen jeweilige Positionen am Übergang vom im Wesentlichen viereckigen zum kreisförmigen Querschnitt sein. Ein Heizelement ermöglicht ein besonders einfaches Trennen des Flockgarns. Bevorzugt kann das Heizelement einen Niederhalter zum Aufbringen einer Kraft auf die flexible Welle aufweisen, der ausgestaltet ist, die flexible Welle während des Heizvorgangs an dem Heizelement zu halten.

In einer bevorzugten Variante der obigen Ausgestaltung umfasst das Heizelement zwei Heizklötze, die jeweils aufheizbar sind. Dann ist die Vorrichtung bevorzugt ausgestaltet, die Heizklötze von einer Seite, beispielsweise von unten, nach Wickeln des Flockfadens um die Grundwelle an die Grundwelle heranzufahren. Die Heizklötze sind bevorzugt ausgestaltet, den Flockfaden an zwei Positionen der Grundwelle aufzuheizen, zum Beispiel an zwei definierten Positionen der Grundwelle, wie oben erläutert. Durch zwei Heizklötze erhält man eine besonders effiziente Trennung des Flockgarns.

In einer weiteren bevorzugten Variante der obigen Ausgestaltung ist die Vorrichtung ausgestaltet, das Heizelement senkrecht zu der Längsachse der Grundwelle in Richtung der Grundwelle zu bewegen. Dadurch kann die Genauigkeit und Produzierbarkeit des Trennens weiter verbessert werden.

In einer weiteren bevorzugten Variante der obigen Ausgestaltung weist das Heizelement ein Schneideelement auf. In einem Fall, in dem das Heizelement zwei Heizklötze aufweist, ist bevorzugt das Schneideelement an einem der Heizklötze angeordnet, insbesondere an dem Heizklotz der näher an dem bereitgestellten Flockfaden angeordnet ist.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispiels der erfindungsgemäßen Vorrichtung,
- Fig. 2: eine schematische Darstellung zur Illustration eines Teils des ersten Ausführungsbeispiels der erfindungsmäßen Vorrichtung,
- Fig. 3: eine weitere schematische Darstellung zur Illustration eines Teils des ersten Ausführungsbeispiels der erfindungsmäßen Vorrichtung,
- Fig. 4: eine weitere schematische Darstellung zur Illustration eines Teils des ersten Ausführungsbeispiels der erfindungsmäßen Vorrichtung,
- Fig. 5: eine schematische Darstellung zur Illustration eines Ausführungsbeispiels eines Heizklotzes,
- Fig. 6: eine schematische Darstellung zur Illustration eines weiteren Ausführungsbeispiels eines Heizklotzes,
- Fig. 7: eine schematische Darstellung zur Illustration eines Ausführungsbeispiels einer Flockfadenbremse,
- Fig. 8: eine weitere schematische Darstellung zur Illustration des Ausführungsbeispiels einer Flockfadenbremse
- Fig. 9: eine schematische Darstellung zur Illustration einer Vielzahl von Grundwellen und flexiblen Wellen und
- Fig. 10: ein schematisches Ablaufdiagramm eines Ausführungsbeispiels des erfindungsgemäßen Verfahrens.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

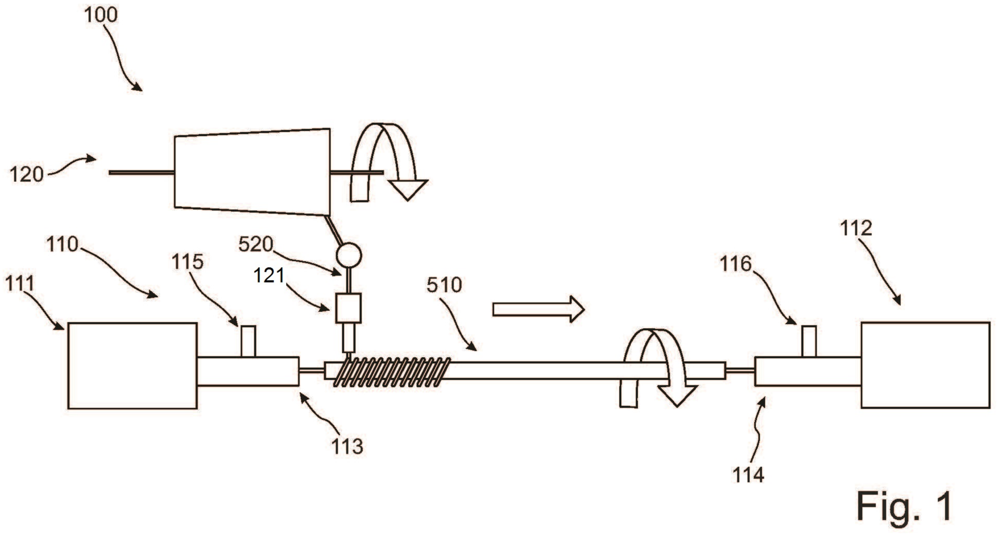

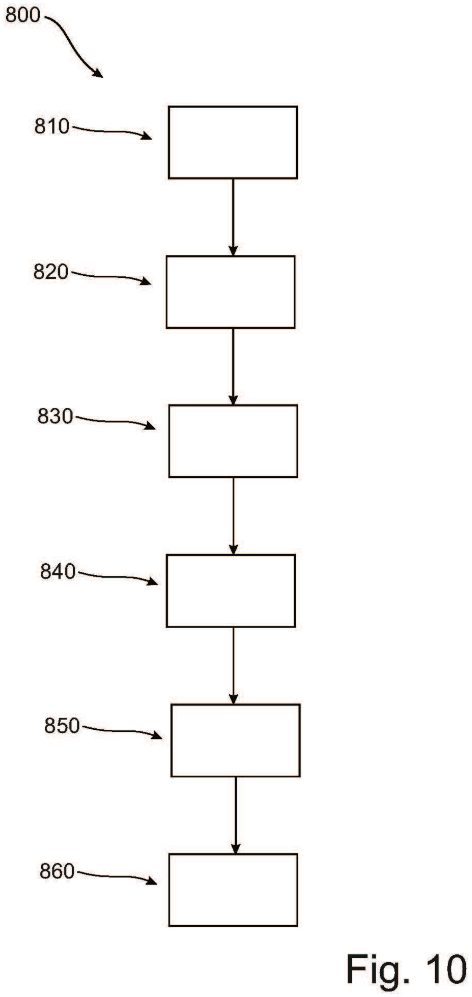

Fig. 1 zeigt eine schematische Darstellung zur Illustration eines ersten Ausführungsbeispiels der erfindungsgemäßen Vorrichtung. Die Vorrichtung 100 ist zum Herstellen einer flexiblen Welle vorgesehen und eingerichtet, wobei die flexible Welle insbesondere in Bezug auf Fig. 10 genauer beschrieben wird.

In Fig. 1 ist die Grundwelle 510 zu erkennen, um die der Flockfaden 520 durch die erfindungsgemäße Vorrichtung bzw. das erfindungsgemäße Verfahren spiralförmig gewickelt wird. Bei der Grundwelle 510 handelt es sich vorzugsweise um eine spiralförmig beflockte Grundwelle.

Die Vorrichtung 100 weist eine Grundwellenvorspannungseinheit 110 und eine Flockfadenbereitstellungseinheit 120 auf. Die Grundwellenvorspannungseinheit 110 ist ausgestaltet, die Grundwelle 510 vorzuspannen. Weiter ist die Grundwellenvorspannungseinheit 110 ausgestaltet, die Grundwelle 510 um eine Längsachse der Grundwelle 510 zu drehen, wobei die Längsachse der Grundwelle 510 in Fig. 1 horizontal verläuft. Die Flockfadenbereitstellungseinheit 120 ist ausgestaltet, den Flockfaden 520 bereitzustellen und den Flockfaden 520 an der Grundwelle 510 zu positionieren.

Die Vorrichtung 100 ist ausgestaltet, den Flockfaden 520 entlang der gespannten Grundwelle 510 zu bewegen, während, die Grundwelle 510 gedreht wird, um den Flockfaden 520 spiralförmig um die Grundwelle 510 zu wickeln.

Die Grundwellenvorspannungseinheit 110 weist in der gezeigten Ausführungsform einen Motor 111 und eine Bremseinheit 112 auf, wobei die Grundwellenvorspannungseinheit 110 ausgestaltet ist, die Grundwelle 510 zwischen dem Motor 111 und der Bremseinheit 112 vorzuspannen. Weiter ist der Motor 111 ausgestaltet, die Grundwelle 510 um die Längsachse der Grundwelle 510 gegen eine Bremskraft der Bremseinheit 112 zu drehen.

Der Motor 111 weist ein erstes Befestigungselement 113 zum Befestigen eines ersten Endes der Grundwelle 510 an dem Motor 111 auf und die Bremseinheit 112 ein zweites Befestigungselement 114 zum Befestigen eines zweiten Endes der Grundwelle 510 an der Bremseinheit 112. Das erste Befestigungselement 113 und das zweite Befestigungselement 114 sind dabei in dieser Ausführungsform identisch ausgestaltet.

Die Vorrichtung 100 kann ausgestaltet sein, den Motor 111 und die Bremseinheit 112 zum Spannen der Grundwelle 510 voneinander weg zu bewegen.

Das erste Befestigungselement 113 und das zweite Befestigungselement 114 weisen jeweils eine Öffnung auf, die vorzugsweise im Wesentlichen viereckig ausgestaltet ist, insbesondere rechteckig oder quadratisch, das heißt, einen im Wesentlichen viereckigen Querschnitt aufweist. Die jeweilige Öffnung ist zur Aufnahme eines jeweiligen Endes der Grundwelle 510 ausgestaltet, wobei das jeweilige Ende auch bevorzugt im Wesentlichen viereckig, insbesondere rechteckig oder quadratisch ist. Weiter weisen das erste Befestigungselement 113 und das zweite Befestigungselement 114 jeweils ein Fixiermittel 115, 116 auf, das ausgestaltet ist zur lösbaren Fixierung des jeweiligen Endes der Grundwelle an dem Motor 111 und der Bremseinheit 112.

Wie bereits erläutert, ist die Flockfadenbereitstellungseinheit 120 ausgestaltet, den Flockfaden 520 an der Grundwelle 510 zu positionieren. Insbesondere kann die Flockfadenbereitstellungseinheit 120 ein Flockfadenaufsetzelement 121 aufweisen, das ausgestaltet ist, den Flockfaden 520 auf eine Oberfläche der Grundwelle 510, bevorzugt nahe eines Endes der Grundwelle 510, aufzusetzen. "Nahe eines Endes" bedeutet hier insbesondere, wenn die Grundwelle an den Enden einen im Wesentlichen viereckigen Querschnitt und dazwischen einen im Wesentlichen kreisförmigen Querschnitt aufweist, dass das Flockfadenaufsetzelement 121 ausgestaltet ist, den Flockfaden 520 nahe einem Übergang der Grundwelle 510 zwischen dem im Wesentlichen viereckigen zu dem im Wesentlichen kreisförmigen Querschnitt aufzusetzen. Bevorzugt handelt es sich bei dem Aufsetzpunkt auf die Oberfläche der Grundwelle 510 um den Übergang der Grundwelle 510 von einem im Wesentlichen kreisförmigen Querschnitt zu einem im Wesentlichen viereckigen Querschnitt.

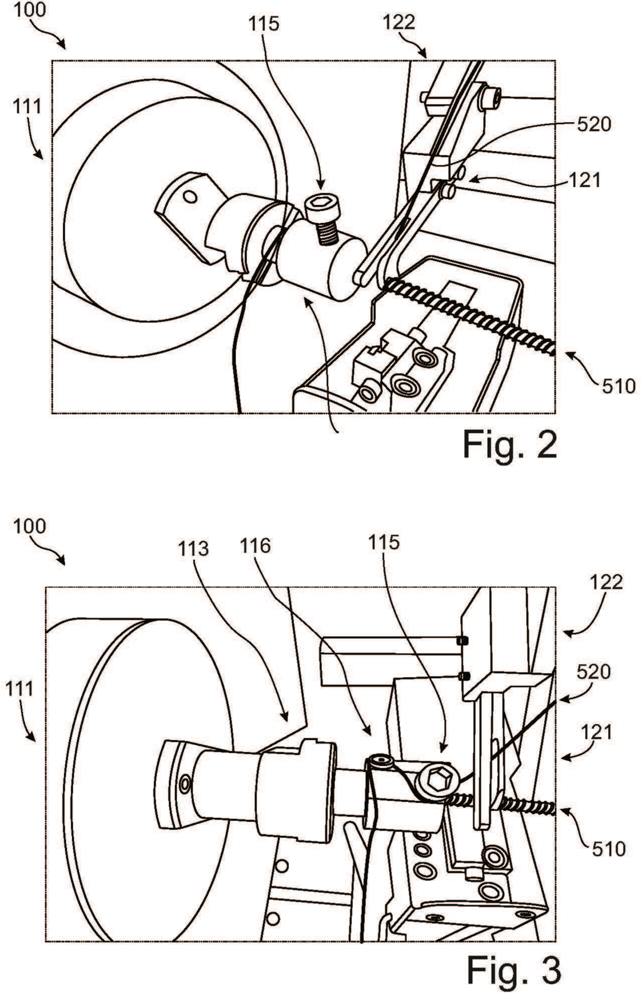

Fig. 2 zeigt eine schematische Darstellung zur Illustration eines Teils des ersten Ausführungsbeispiels der erfindungsgemäßen Vorrichtung 100. Insbesondere ist in Fig. 2 lediglich ein Teil der Grundwellenvorspannungseinheit 110 und der Flockfadenbereitstellungseinheit 120 gezeigt. Fig. 2 zeigt den Zeitpunkt des Herstellens der flexiblen Welle 500, zu dem die Grundwelle 510 vorgespannt ist und der Flockfaden 520 an der Grundwelle 510 positioniert ist, aber der Flockfaden 520 noch nicht spiralförmig um die Grundwelle 510 gewickelt wurde.

Auf der linken Seite von Fig. 2 ist der Motor 111 gezeigt, an dem durch ein Befestigungselement 113 und ein Fixiermittel 115 die Grundwelle 510 vorgespannt ist. Zudem ist ein Flockfadenaufsetzelement 121 zu erkennen, das ausgestaltet ist, den Flockfaden 520 auf die Oberfläche der Grundwelle 510 aufzusetzen.

Weiter ist in Fig. 2 zu erkennen, dass die Flockfadenbereitstellungseinheit 120 einen Flockfadenschlitten 122 aufweist, der ausgestaltet ist, den Flockfaden 520 bzw. das Flockfadenaufsetzelement 121 mit einer vordefinierten Vorschubgeschwindigkeit entlang der gespannten Grundwelle 510 über eine vordefinierte Wegstrecke zu bewegen.

Fig. 3 zeigt eine weitere schematische Darstellung zur Illustration eines Teils des ersten Ausführungsbeispiels der erfindungsgemäßen Vorrichtung 100. Insbesondere sind in Fig. 3 wiederum der Motor 111, das Befestigungselement 113, das dem ersten Befestigungselement entspricht, das Fixiermittel 115 zum Fixieren der Grundwelle 510 an dem ersten Befestigungselement 113, das Flockfadenaufsetzelement 121 und der Flockfadenschlitten 122 zu erkennen. Fig. 3 zeigt den Zeitpunkt des Herstellens der flexiblen Welle 500, zu dem die Grundwelle 510 vorgespannt ist und der Flockfaden 520 an der Grundwelle 510 positioniert ist, aber der Flockfaden 520 noch nicht spiralförmig um die Grundwelle 510 gewickelt wurde.

Zudem ist hier ein Fixierelement 116 zu erkenne, dass an der Grundwellenvorspannungseinheit 110 bzw. dem ersten Befestigungselement 113 angeordnet ist, das zur lösbaren Fixierung des Flockfadens 520 an der Grundwellenvorspannungseinheit 110 vorgesehen und eingerichtet ist.

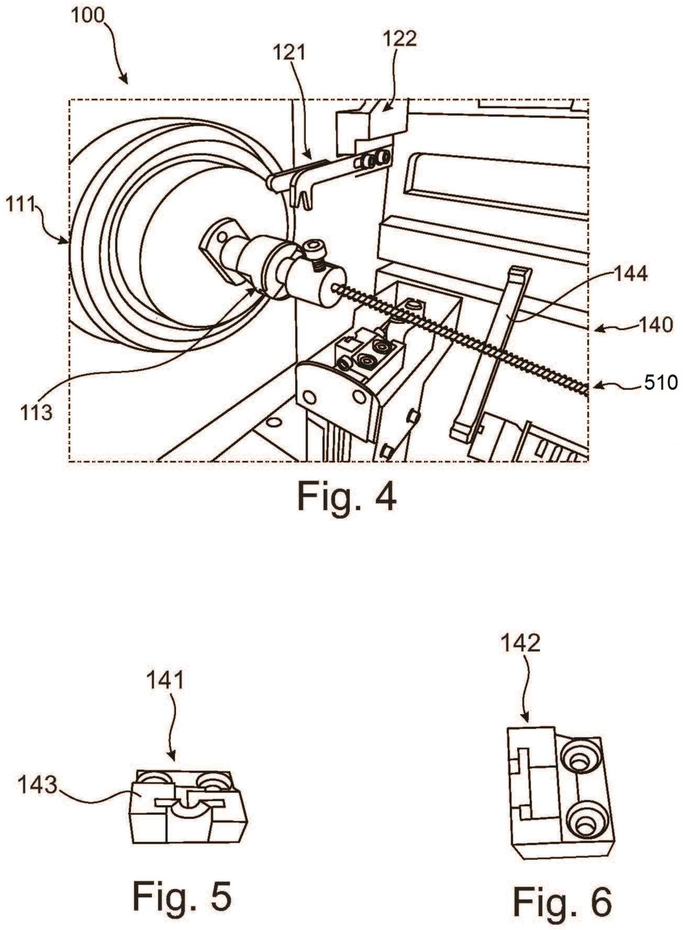

Fig. 4 zeigt eine weitere schematische Darstellung zur Illustration eines Teils des ersten Ausführungsbeispiels der erfindungsgemäßen Vorrichtung 100.

Auch hier sind der Motor 111, das erste Befestigungselement 113, das Flockfadenaufsetzelement 121 und der Flockfadenschlitten 122 zu erkennen. Zu dem gezeigten Zeitpunkt ist die Grundwelle 510 vorgespannt, aber der Flockfaden noch nicht an der Grundwelle positioniert.

In Fig. 4 ist insbesondere ein Heizelement 140 zu erkennen, das ausgestaltet ist, nach Wickeln des Flockfadens 520 um die Grundwelle 510 zumindest den Flockfaden 520 derart aufzuheizen, dass der Flockfaden 520 aufgetrennt und/oder verschmolzen wird.

Bevorzugt ist das Heizelement 140 bzw. die Vorrichtung 100 ausgestaltet, das Heizelement 140 von unten an die Grundwelle 510 heranzufahren, sodass eine Wärme, die durch das Heizelement 140 entwickelt wird, auf die Grundwelle 510 bzw. den Flockfaden 520 wirken kann.

Beispielsweise weist das Heizelement 140 zwei Heizklötze auf, die für sich genommen in Fig. 5 und 6 gezeigt sind.

Dabei können die zwei Heizklötze 141, 142 gleichartig ausgestaltet sein oder unterschiedlich ausgestaltet sein. Die zwei Heizklötze 141, 142 sind jeweils aufheizbar, wobei bevorzugt die Heizklötze 141, 142 gleichzeitig aufheizbar sind.

Zurück zu Fig. 4 kann das Heizelement 140 einen Niederhalter 144 zum Verschmelzen aufweisen. Der Niederhalter 144 ist ausgestaltet, die flexible Welle während des Heizvorgangs an dem Heizelement 140 zu halten. Dafür ist der Niederhalter 144 während des Heizvorgangs über der Grundwelle 510 bzw. der flexiblen Welle angeordnet und wirkt derart auf die Grundwelle 510 bzw. die flexible Welle, dass sie an dem Heizelement 140 gehalten wird.

Die Vorrichtung 100 ist ausgestaltet, das Heizelement 140 senkrecht zu der Längsachse der Grundwelle 510, das heißt in Bezug auf die Vorrichtung 100 von unten nach oben, in Richtung der Grundwelle 510 zu bewegen.

Es ist bevorzugt, dass das Heizelement 140, insbesondere einer der zwei Heizklötze 141, 142, ein Schneideelement 143 aufweist (s. Fig. 5). Dies ermöglicht ein einfaches Trennen des bereits umwickelten Flockfadens von dem bereitgestellten Flockfaden.

Die Vorrichtung 100 kann ausgestaltet sein, beispielsweise mit einer dafür vorgesehenen Steuerung, den Flockfaden 520 mit einer vordefinierten Fadenspannung entlang der gespannten Grundwelle 510 zu bewegen, wobei der Flockfaden 520 mit Hilfe einer Flockfadenbremse auf einer vordefinierten Fadenspannung gehalten wird.

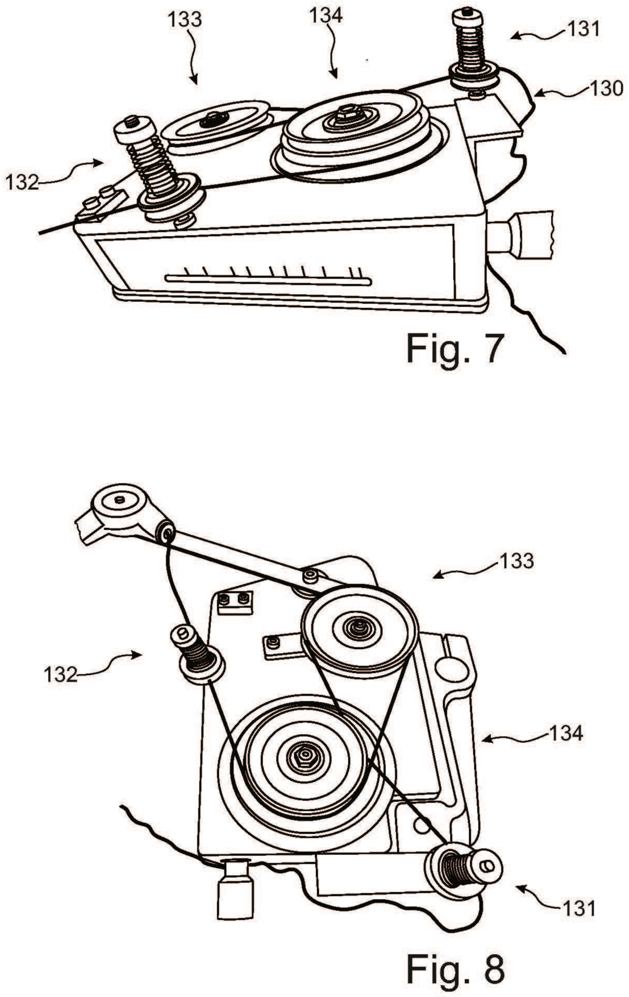

Die Flockfadenbremse 130 ist dabei in den Fig. 7 und 8 aus zwei verschiedenen Perspektiven gezeigt. Die Flockfadenbremse 130 weist zwei Federelemente 131, 132 auf sowie zwei Umlenkrollen 133, 134. Der Flockfaden 520 kann dann das Federelement 131, die beiden Umlenkrollen 133, 134 und das weitere Federelement 132 durchlaufen.

Der Flockfaden verläuft dabei zunächst von einem ersten Federelement 131 zu einer ersten Umlenkrolle 134. Dann verläuft der Flockfaden um eine zweite Umlenkrolle 133 und erneut um die erste Umlenkrolle 134. Dann verläuft der Flockfaden zu einem zweiten Federelement 132 und von da zu einem Hebel.

Durch die Umlenkrollen 133, 134 kann der Flockfaden 520 auf Spannung gehalten werden, wobei durch die Federelemente 131, 132 eine Bremskraft ausgeübt werden kann. Damit kann der Flockfaden 520 vor Anordnen an dem Flockfadenaufsetzelement bzw. dem Flockfadenschlitten 122 auf Spannung gehalten werden und gegen eine Bremskraft durch die Flockfadenbremse 130 bereitgestellt werden, d.h. in Richtung Grundwelle 510 zugeführt werden.

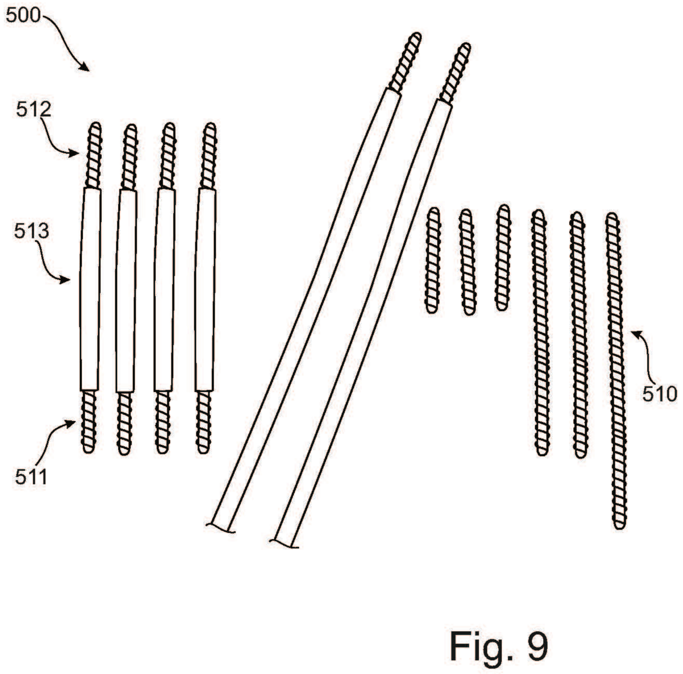

Fig. 9 zeigt eine Vielzahl von Grundwellen 510 mit und ohne umwickelten Flockfäden 520, wobei es sich bei Grundwellen 510, die mit einem Flockfaden 520 umwickelt sind, dann um flexible Wellen 500, insbesondere flexible Sitzverstellwellen für ein Fahrzeug, handelt.

Es ist zu erkennen, dass eine Länge der Grundwellen 510 unterschiedlich sein kann. Weiter sind auch die Enden, das heißt, ein erstes Ende 511 und ein zweites Ende 512 einer jeweiligen Grundwelle 510, zu erkennen, wobei die Enden 511, 512 während der Herstellung der flexiblen Welle an der Grundwellenvorspannungseinheit bzw. in den Öffnungen angeordnet sind. Das erste Ende 511 und das zweite Ende 512 entsprechen bevorzugt einem Bereich der Welle, in dem die Welle einen im Wesentlichen viereckigen ,insbesondere quadratischen oder rechteckigen, Querschnitt aufweist, wobei der mittlere Bereich 513 dann zwischen dem ersten Ende 511 und dem zweiten Ende 512 angeordnet ist und bevorzugt einen im Wesentlichen kreisförmigen Querschnitt aufweist.

Fig. 10 zeigt ein schematisches Ablaufdiagramm eines Ausführungsbeispiels des erfindungsgemäßen Verfahrens. Das Verfahren 800 ist zum Herstellen einer flexiblen Welle, insbesondere einer flexiblen Sitzverstellwelle für ein Fahrzeug, vorgesehen, wobei die flexible Welle eine Grundwelle und einen Flockfaden umfasst und wobei die Grundwelle bevorzugt eine spiralförmig beflockte Grundwelle ist.

In einem ersten Schritt 810 wird die Grundwelle vorgespannt, wobei bevorzugt die Vorspannung durch eine Grundwellenvorspannungseinheit, besonders bevorzugt einen Motor und eine Bremseinheit, durchgeführt wird.

In einem zweiten Schritt 820 wird der Flockfaden bereitgestellt und an der Grundwelle positioniert, wobei das Bereitstellen und Positionieren bevorzugt durch eine Flockfadenbereitstellungseinheit, besonders bevorzugt ein Flockfadenaufsetzelement und einen Flockfadenschlitten, vorgesehen ist.

Die Reihenfolge der Schritte 810 und 820 ist dabei beliebig und die Schritte 810 und 820 können auch gleichzeitig erfolgen.

In einem dritten Schritt 830 wird die Grundwelle um eine Längsachse der Grundwelle gedreht und in einem vierten Schritt 840 der Flockfaden entlang der gespannten Grundwelle bewegt, während die Grundwelle gedreht wird, um den Flockfaden spiralförmig um die Grundwelle zu wickeln. Entsprechend werden der dritte Schritt 830 und der vierte Schritt 840 gleichzeitig durchgeführt.

Weiter kann das Verfahren 800 einen Schritt 850 umfassen, in dem der Flockfaden nach Wickeln des Flockfadens um die Grundwelle aufgeheizt wird, so dass der Flockfaden aufgetrennt und/oder verschmolzen wird.

Zusätzlich oder alternativ umfasst das Verfahren 800 einen Schritt 860, in dem der Flockfaden geschnitten wird.

Auch die Schritte 850 und 860 können in beliebiger Reihenfolge oder eben auch gleichzeitig durchgeführt werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

Es folgen weitere Überlegungen zu der Erfindung:
Die vorliegende Erfindung ermöglicht die Herstellung von Flexwellen mit einer Geräuschreduzierung bei ordnungsgemäßer Anwendung der Flexwellen, das heißt, zum Beispiel bei sich drehenden Flexwellen in einem Schlauch.

Stand der Technik ist seit Jahrzehnten das statische Beflocken von Wellen.

Das erfindungsgemäße Verfahren ermöglicht ein einfacheres, schnelleres Herstellen von qualitativ hochwertigeren Flexwellen oder zumindest eine Alternative zu bekannten Herstellungsverfahren.

Zur Durchführung des erfindungsgemäßen Verfahrens werden bevorzugt die folgenden Schritte durchgeführt. Insbesondere ist die genannten Reihenfolge der Schritte eine bevorzugte Reihenfolge.

In einem ersten Schritt wird die Grundwelle, die auch als Flexwelle bezeichnet werden kann, in eine Grundwellenvorspannungseinheit, bevorzugt auf einer Seite (beispielsweise links) in einen Motor und auf einer anderen Seite (beispielsweise rechts) in eine Bremseinheit, eingesteckt und ggf. fixiert, wobei der Motor und die Bremseinheit bevorzugt jeweils einen Vierkantadapter bzw. eine Vierkantaufnahme aufweisen, in den/die die Grundwelle eingesteckt und fixiert wird.

In einem zweiten Schritt wird die Flexwelle auf Vorspannung gesetzt.

In einem dritten Schritt wird der Flockfaden, zum Beispiel mit einem Flockfadenaufsetzelement, der auch als Flockfadenfinger bezeichnet werden kann, auf die Flexwelle aufgesetzt.

In einem vierten Schritt wird der Flockfaden an der Grundwellenvorspannungseinheit, bevorzugt dem Motor, besonders bevorzugt dem Vierkantadapter, fixiert.

In einem fünften Schritt kann eine Schutzvorrichtung, zum Beispiel eine Schutzhaube, zum Schutz eines Bedienenden der Vorrichtung geschlossen werden und in einem sechsten Schritt der eigentliche Prozess der Herstellung gestartet werden.

Dabei bewegt sich in einem Schritt 6.1 der Flockfaden von einer Seite zur anderen Seite (beispielsweise von links nach rechts) mit einer definierten Fadenspannung, über die sich drehende Flexwelle mit einer festgelegten Vorschubgeschwindigkeit und Wegstrecke.

Weiter fährt in einem Schritt 6.2 das Heizelement, bevorzugt die zwei Heizblöcke an die Flexwelle (zum Beispiel nach oben zur Flexwelle) und verschmilzt und trennt den Flockfaden.

In einem siebten Schritt kann die Schutzvorrichtung geöffnet werden, in einem achten Schritt die Vorspannung gelöst werden, in einem neunten Schritt die Fixierung der Wellenenden, zum Beispiel in dem Vierkantadapter, gelöst werden und in einem zehnten Schritt die Flexwelle entnommen werden.

Anwendung findet das erfindungsgemäße Verfahren bevorzugt bei Spiralflockwellen. Bei Spiralflockwellen ist es schwierig, einen Kleber unter dem Flockfaden aufzubringen und ein "Endlosverfahren" anzuwenden. Insbesondere ist es unvorteilhaft, vor dem Pressen der Vierkantenden der Flexwelle das Flockgarn abzubürsten, weil hierbei auch das Spiralflock, welches bereits in der Stahlwelle aufgebracht ist, beschädigt oder sogar entfernt werden würde.

Die Erfindung betrifft eine Vorrichtung zum Herstellen einer flexiblen Welle, insbesondere einer flexiblen Sitzverstellwelle für ein Fahrzeug, wobei die flexible Welle eine Grundwelle und einen Flockfaden umfasst, wobei die Grundwelle bevorzugt eine spiralförmig beflockte Grundwelle ist, wobei die Vorrichtung aufweist: eine Grundwellenvorspannungseinheit, die ausgestaltet ist, die Grundwelle vorzuspannen und eine Flockfadenbereitstellungseinheit, die ausgestaltet ist, den Flockfaden bereitzustellen, wobei die Grundwellenvorspannungseinheit ausgestaltet ist, die Grundwelle um eine Längsachse der Grundwelle zu drehen, wobei die Flockfadenbereitstellungseinheit ausgestaltet ist, den Flockfaden an der Grundwelle zu positionieren und wobei die Vorrichtung ausgestaltet ist, den Flockfaden entlang der gespannten Grundwelle zu bewegen, während die Grundwelle gedreht wird, um den Flockfaden spiralförmig um die Grundwelle zu wickeln.

### Bezugszeichenliste

100 Vorrichtung
110 Grundwellenvorspannungseinheit
111 Motor
112 Bremseinheit
113, 114 erstes und zweites Befestigungselement
115 Fixiermittel
116 Fixierelement
120 Flockfadenbereitstellungseinheit
121 Flockfadenaufsetzelement
122 Flockfadenschlitten
130 Flockfadenbremse
131, 132 Federelement
133, 134 Umlenkrolle
140 Heizelement
141, 142 Heizklotz
143 Schneideelement
144 Niederhalter
500 flexible Welle
510 Grundwelle
511, 512 erstes und zweites Ende
513 mittlerer Bereich
520 Flockfaden
800 Verfahren

## Patentansprüche

1. Vorrichtung (100) zum Herstellen einer flexiblen Welle (500), insbesondere einer flexiblen Sitzverstellwelle für ein Fahrzeug, wobei die flexible Welle (500) eine Grundwelle (510) und einen Flockfaden (520) umfasst, wobei die Grundwelle (510) bevorzugt eine spiralförmig beflockte Grundwelle ist, wobei die Vorrichtung (100) aufweist:
eine Grundwellenvorspannungseinheit (110), die ausgestaltet ist, die Grundwelle (510) vorzuspannen und
eine Flockfadenbereitstellungseinheit (120), die ausgestaltet ist, den Flockfaden (520) bereitzustellen,
wobei die Grundwellenvorspannungseinheit (110) ausgestaltet ist, die Grundwelle (510) um eine Längsachse der Grundwelle (510) zu drehen,
wobei die Flockfadenbereitstellungseinheit (120) ausgestaltet ist, den Flockfaden (520) an der Grundwelle (510) zu positionieren und
wobei die Vorrichtung (100) ausgestaltet ist, den Flockfaden (520) entlang der gespannten Grundwelle (510) zu bewegen, während die Grundwelle (510) gedreht wird, um den Flockfaden (520) spiralförmig um die Grundwelle (510) zu wickeln.

2. Vorrichtung (100) nach Anspruch 1, wobei die Grundwellenvorspannungseinheit (110) einen Motor (111) und eine Bremseinheit (112) aufweist, wobei die Grundwellenvorspannungseinheit (110) ausgestaltet ist, die Grundwelle (510) zwischen dem Motor (111) und der Bremseinheit (112) vorzuspannen und wobei der Motor (111) ausgestaltet ist, die Grundwelle (510) um die Längsachse der Grundwelle (510) gegen eine Bremskraft der Bremseinheit (112) zu drehen, wobei die Vorrichtung (100) bevorzugt ausgestaltet ist, den Motor (111) und die Bremseinheit (112) zum Spannen der Grundwelle (510) voneinander wegzubewegen.

3. Vorrichtung (100) nach Anspruch 2, wobei der Motor (111) ein erstes Befestigungselement (113, 114) zum Befestigen eines ersten Endes (511, 512) der Grundwelle (510) aufweist und wobei die Bremseinheit (112) ein zweites Befestigungselement (113, 114) zum Befestigen eines zweiten Endes (511, 512) der Grundwelle (510) aufweist.

4. Vorrichtung (100) nach Anspruch 3, wobei das erste Befestigungselement (113, 114) und/oder das zweite Befestigungselement (113, 114) jeweils eine Öffnung, bevorzugt mit einem im Wesentlichen viereckigen, besonders bevorzugt rechteckigen oder quadratischen, Querschnitt, zur Aufnahme eines jeweiligen, im Querschnitt bevorzugt im Wesentlichen viereckigen, besonders bevorzugt rechteckigen oder quadratischen, Endes (511, 512) der Grundwelle (510), und jeweils ein Fixiermittel (115, 116) zur lösbaren Fixierung des jeweiligen Endes (511, 512) an dem Motor (111) und der Bremseinheit (112) aufweist.

5. Vorrichtung (100) nach einem der vorstehenden Ansprüche, wobei die Grundwellenvorspannungseinheit (110) ein Fixierelement (116) zur lösbaren Fixierung des Flockfadens (520) an der Grundwellenvorspannungseinheit (110) aufweist.

6. Vorrichtung (100) nach einem der vorstehenden Ansprüche, wobei die Flockfadenbereitstellungseinheit (120) ein Flockfadenaufsetzelement (121) aufweist, das ausgestaltet ist, den Flockfaden (520) auf eine Oberfläche der Grundwelle (510), bevorzugt nahe eines Endes (511, 512) der Grundwelle (510), aufzusetzen.

7. Vorrichtung (100) nach einem der vorstehenden Ansprüche, wobei die Vorrichtung (100) ausgestaltet ist, bevorzugt mit einer Steuerung, den Flockfaden (520) mit einer vordefinierten Fadenspannung entlang der gespannten Grundwelle (510) zu bewegen, wobei bevorzugt der Flockfaden (520) mit Hilfe einer Flockfadenbremse (130), die besonders bevorzugt zumindest ein Federelement (131, 132) und eine Umlenkrolle (133, 134) aufweist, auf einer vordefinierten Fadenspannung gehalten wird.

8. Vorrichtung (100) nach einem der vorstehenden Ansprüche, wobei die Flockfadenbereitstellungseinheit (120) einen Flockfadenschlitten (122) aufweist, der ausgestaltet ist, den Flockfaden (520) mit einer vordefinierten Vorschubgeschwindigkeit entlang der gespannten Grundwelle (510) über eine vordefinierte Wegstrecke zu bewegen.

9. Vorrichtung (100) nach einem der vorstehenden Ansprüche, wobei die Vorrichtung (100) weiter ein Heizelement (140) aufweist, das ausgestaltet ist, nach Wickeln des Flockfadens (520) um die Grundwelle (510) zumindest den Flockfaden (520) derart aufzuheizen, dass der Flockfaden (520) aufgetrennt und/oder verschmolzen wird.

10. Vorrichtung (100) nach Anspruch 9, wobei das Heizelement (140) zwei Heizklötze (141, 142) umfasst, die jeweils aufheizbar sind.

11. Vorrichtung (100) nach einem der Ansprüche 9 und 10, wobei die Vorrichtung (100) ausgestaltet ist, das Heizelement (140) senkrecht zu der Längsachse der Grundwelle (510) in Richtung der Grundwelle (510) zu bewegen.

12. Vorrichtung nach einem der Ansprüche 9 bis 11, wobei das Heizelement (140) ein Schneideelement (143) aufweist.

13. Verfahren (800) zum Herstellen einer flexiblen Welle, insbesondere einer flexiblen Sitzverstellwelle für ein Fahrzeug, wobei die flexible Welle eine Grundwelle und einen Flockfaden umfasst, wobei die Grundwelle bevorzugt eine spiralförmig beflockte Grundwelle ist, wobei das Verfahren die Schritte umfasst:
Vorspannen (810) der Grundwelle,
Bereitstellen (820) des Flockfadens und Positionieren des Flockfadens an der Grundwelle,
Drehen (830) der Grundwelle um eine Längsachse der Grundwelle und
Bewegen (840) des Flockfadens entlang der gespannten Grundwelle, während die Grundwelle gedreht wird, um den Flockfaden spiralförmig um die Grundwelle zu wickeln, wobei bevorzugt das Verfahren durch eine Vorrichtung nach einem der Ansprüche 1 bis 12 durchgeführt wird.

14. Verfahren (800) nach Anspruch 13, mit dem weiteren Schritt:
Aufheizen (850) des Flockfadens nach Wickeln des Flockfadens um die Grundwelle, so dass der Flockfaden aufgetrennt und/oder verschmolzen wird und/oder
Schneiden (860) des Flockfadens.
